# EUROPÄISCHE PATENTSCHRIFT

(11) **EP 2 788 260 B1**
(45) Veröffentlichungstag und Bekanntmachung des Hinweises auf die Patenterteilung: **20.04.2016**
(21) Anmeldenummer: 12798609.9
(22) Anmeldetag: 24.11.2012
(51) Int. Cl.: B65B 9/087, B65G 54/02

(54) **VORRICHTUNG ZUM HERSTELLEN, HANDHABEN UND FÜLLEN VON BEUTELN**
DEVICE FOR PRODUCING, HANDLING AND FILLING BAGS
DISPOSITIF DE FABRICATION, DE MANUTENTION ET DE REMPLISSAGE DE SACHETS

(30) Priorität: 11.12.2011 US 201113316525; 31.01.2012 DE 102012100748
(43) Veröffentlichungstag der Anmeldung: 15.10.2014
(73) Patentinhaber: KHS GmbH, 44143 Dortmund (DE)
(72) Erfinder: SAMMONS, Michael, Parrish, FL 34218 (US); CALABRESE, Roger, Bradenton, FL 34202 (US); WATMOUGH, Oliver, Sarasota, FL 34231 (US)
(86) Internationale Anmeldenummer: PCT/EP2012/004873
(87) Internationale Veröffentlichungsnummer: WO 2013/087151

(56) Entgegenhaltungen:
- US-A1- 2009 026 846
- US-B1- 6 272 815
- US-B2- 6 876 107

## Beschreibung

Die vorliegende Erfindung betrifft eine Vorrichtung zum Herstellen, Handhaben und Füllen von Beuteln.

Eine typische Vorrichtung zum Herstellen von Verpackungen, die jeweils eine Menge an Granulat oder Teilchen in einem versiegelten Plastikbeutel aufweisen, weist typischerweise entlang eines Produktionswegs beabstandet eine Aufnahmestation, eine Beutelfalt- bzw. -stauchstation, eine Beutelentfaltsfation, eine Füllstation, eine Versiegelstation und eine Abgabestation an einem stromabwärtigen Ende des Wegs auf.

Die Aufnahmestation kann einfach vorgefertigte Beutel aufnehmen Alternativ wird wenigstens teilweise eine thermoplastische Kunstharzfolie mit einer Längsfalte gebildet, dann durch Paare von Querschweißnähten in eine Abfolge von normalerweise rechtwinkligen Beuteln unterteilt, die miteinander verbunden sind, und längs laufend stromab gefördert, wie in der US 6,272,815 beschrieben ist. Die Folie, die die Beutel bildet, ist typischerweise aus Polypropylen, Polyethylen, Mehrlagenfolie oder dergleichen hergestellt, die preiswert, leicht bedruckbar, schweißbar und ausreichend dicht ist, um eine hermetische Verpackung zu bilden. Jeder Beutel weist somit normalerweise identische Vorder- und Rückelemente auf, die am Boden an einer einheitlichen Falte und Seitenkanten, die jeweils durch eine entsprechende Querschweißnaht gebildet sind, miteinander verbunden sind. Diese Aufnahmestation weist ebenso eine Beuteltrennfunktion auf, wobei ein quer laufender Schnitt durch die gefaltete Folie zwischen zwei unmittelbar benachbarten Seitenschweißnähten gemacht wird. Bevor dies durchgeführt wird, werden die Beutel typischerweise durch Förderklammern an den oberen Enden der Seitenkanten gefasst, so dass sie, wenn sie getrennt sind, normalerweise in einer aufrechten Position mit dem offenen Ende des Beutels nach oben gerichtet gehalten werden.

In der Faltstation werden die zwei Klammern, die die zwei oberen Ecken jedes Beutels greifen, längs laufend aufeinander zu bewegt, was erreicht werden kann, wenn sich beide Klammern durch vorübergehendes Verlangsamen der führenden Klammer oder Beschleunigen der nachlaufenden Klammer bewegen oder nach dem Anhalten des Klammerpaars durch Bewegen einer in Richtung auf die andere oder beide in Richtung aufeinander zu. Mit jedem Faltverfahren können Sauggreifer die Vorder- und Rückelemente oben quer laufend voneinander weg ziehen, so dass das Ergebnis ein aufwärts gerichteter offener Beutel ist, der eine relativ weite Öffnung bietet. Die Greifer können zweiteilige Klammern sein, die sich öffnen und schließen, oder sie können vakuumbetätigte Saugnäpfe sein. Es ist möglich, zwei Beutel mit lediglich drei Klammern zu greifen, wobei die mittlere Klammer die nachlaufende Kante des stromabwärtigen Beutels und die führende Kante des stromaufwärtigen Beutels hält.

In der Füllstation wird das Material in den aufwärts gerichteten offenen Beutel gefüllt, ganz gleich ob dies ein granulöses Material wie Katzenstreu oder Zucker ist oder ein einzelnes Objekt oder auch mehrere Objekte wir zum Beispiel Kartoffelchips, Trockensuppe, Nüsse oder dergleichen.

In der Entfaltstation werden die zwei Klammern, die die zwei oberen Ecken jedes gefüllten Beutels greifen, dann auseinander bewegt, erneut durch vorübergehendes Beschleunigen der führenden Klammer oder Bremsen der nachlaufenden Klammer, so dass die oberen Kanten der Elemente, die den Beutel bilden, miteinander in Eingriff stehen. Es ist ebenfalls möglich, einen Reißverschluss oder anderen lösbaren, streifenförmigen Verschluss unterhalb der oberen Beutelkante zu bilden, so dass, nachdem die obere Kante zum Beispiel durch Abreißen geöffnet ist, der Beutel erneut versiegelt werden kann.

In der Versiegelstation werden die oberen Kanten zusammengeschweißt, wodurch ein hermetisch geschlossener Behälter hergestellt wird, der egal welchen Inhalte hält, der in ihn in der Füllstation eingefüllt wurde.

An der Abgabestation werden die fertigen, versiegelten Beutel auf eine Rutsche, die zu einer Verpackungsstation führt, oder direkt in einen Karton oder dergleichen fallen gelassen.

Alle diese Schritte erfolgen typischerweise bei hoher Geschwindigkeit, wobei die Folie an dem stromaufwärtigen Ende des normalerweise geraden Wegs zugeführt und gefaltet wird und der Inhalt quer laufend zum Weg bewegt wird. Bei einer Massenproduktionsanlage mit hohem Volumen ist die Geschwindigkeit zu maximieren.

Bei dem Produktionsweg für das zuvor beschriebene System ist es üblich, dass er sich horizontal erstreckt und eine ziemlich komplexe Fördereinrichtung aufweist, die die Beutel entlang des Wegs transportiert, sobald sie von der gefalteten und geschweißten Folie frei geschnitten sind. Hinsichtlich der Falt-/Entfaltschritte vor und nach dem Füllschritt ist es für das Klammerpaar, das jeden Beutel an seinen oberen Ecken greift, erforderlich, sich nicht nur entlang des Transportwegs zu bewegen, sondern zum Falten und Entfalten ebenso relativ zueinander.

Dies kann durch mechanische Systeme erfolgen, wie zum Beispiel Mehrklammermaschinen wie in US 6,050,061, US 6,276,117 und US 2010/0269458 offenbart, deren Offenbarungen hiermit durch Bezugnahme aufgenommen sind. Andere mechanische Systeme verwenden Hubstangenförderer oder, wie in DE 20 201 006 222 U offenbart, ein Transportschneckensystem. Alle derartigen Anlagen sind sehr teuer, sehr komplex, sehr schwer zu warten und zu bedienen und vor allem extrem schwierig auf Beutel unterschiedlicher Größen einzustellen.

Eine wesentliche Verbesserung wird mit dem System der US 6,876,107 von Jacobs erzielt, Dieses System verwendet einzelne klammertragende Schlitten, die eine Schiene entlang fahren können, die eine Arbeitsstrecke aufweist, die sich durch die Schneid-Falt-, Füll-, Entfalt-, Schweiß- und Abgabestation erstreckt, durch die die Schlittenpaare entsprechende Beutel tragen, und eine Rückstrecke, über die die Schlitten leer zu dem stromaufwärtigen Ende der Arbeitsstrecke zurück gebracht werden. Jeder Schlitten fährt über Rollen auf der Schiene und trägt mehrere Permanentmagnete. Die Schiene ist intern mit einer Abfolge von kleinen einzelnen, erregbaren Elektromagneten versehen, die durch eine elektronische und programmierbare Steuereinrichtung erregt werden können, um so die Bewegungen der Schlitten entlang der Schiene und ebenso ihren Abstand voneinander zu steuern. Somit werden Schlittenpaare auf einen Abstand, der einer Länge eines ungefalteten, flachen Beutels entspricht, an der Schneidstation festgelegt, wenn ihre Klammern in einen entsprechenden Beutel eingehängt werden, während er von der Folie frei geschnitten wird, wenn dann die Klammerpaare durch ihre Schlitten stromab bewegt werden, werden ihre relativen Abstände verringert, um den Beutel zum Füllen zu falten, und erneut vergrößert, um ihn zum Zuschweißen zu entfalten, und an dem stromabwärtigen Ende der Arbeitsstrecke werden die Klammern gelöst, so dass die Schlitten stromauf zurück gebracht werden können.

Dieses System weist den beachtlichen Vorteil auf, dass es mechanisch relativ einfach ist und dass es für eine Änderung des Beutelformats elektronisch programmiert werden kann. Es weist den beachtlichen Nachteil auf, dass es sehr kostspielig ist, da die Schiene mit ihrer Spulenreihe ein sehr teures Element ist und jede elektromagnetische Spule mit der Steuereinrichtung verbunden werden muss.

Aus der US2009/0026846 A1 ist ein hybrides Transportsystem bekannt geworden, bei dem entlang der Arbeitstrecke ein weichmagnetischer Verbundkern angeordnet ist, während entlang der Rückstrecke eine mechanische Fördereinrichtung vorgesehen ist.

Es ist daher ein Ziel der vorliegenden Erfindung, ein verbessertes Transportsystem für ein Beutelherstell- und Beutelfüllsystem bereitzustellen.

Ein weiteres Ziel ist die Bereitstellung eines solchen verbesserten Transportsystems für ein Beutelherstell- und Beutelfüllsystem, das die vorstehenden Nachteile überwindet, das insbesondere einen relativ einfachen Aufbau aufweist, jedoch leicht für eine Änderung der Beutelgröße oder des Beutelformats umprogrammiert werden kann.

Dieses Ziel wird in einer Maschine mit einem Produktionsweg erreicht, der mit einer stromaufwärtigen Aufnahme versehen ist, in der einzelne Beutel aus einer schweißbaren Folie hergestellt oder einzelne vorgefertigte Beutel zugeführt und mit Öffnungen der Beutel nach oben, gerichtet ausgerichtet werden, einer Füllstation stromab hiervon, in der Inhalte in die offenen Beutel durch die nach oben offenen Öffnungen der Beutel eingefüllt werden und einer Versiegelstation stromab hiervon, in der die offenen Öffnungen der Beutel geschlossen werden. Ein Transportsystem für die Maschine weist entsprechend der Erfindung eine Endlosschiene mit einer Arbeitsstrecke auf, die sich entlang des Wegs erstreckt, und einer Rückstrecke, die sich von einem stromabwärtigen Ende der Arbeitsstrecke zu einem stromaufwärtigen Ende der Arbeitstrecke erstreckt, und mehrere Schlitten, die jeweils wenigstens einen Permanentmagneten und eine Klammer tragen. Die Schlitten fahren auf der Schiene zur Bewegung durch die Stationen auf der Arbeitsstrecke und zur Bewegung von dem stromabwärtigen Ende der Arbeitsstrecke entlang der Rückstrecke zurück zu dem stromaufwärtigen Ende der Arbeitsstrecke. Gemäß der Erfindung bilden ein Elektromagnetenarray auf der Schiene lediglich entlang der Arbeitsstrecke und eine elektronische Steuereinrichtung, die mit den Elektromagneten verbunden ist, zusammen einen frequenzgesteuerten Lineardirektantrieb, wie zum Beispiel den PowerFlex®-Drehstromantrieb mit einstellbarer Frequenz, hergestellt von Rockwell Automation. Dieser elektromagnetische Antrieb treibt die Schlitten stromab durch die Arbeitsstrecke voran, während die Fahrgeschwindigkeiten wenigstens der Hälfte der Schlitten in der Arbeitsstrecke variiert werden, um so Beutel, die in den Klammern der Schlitten gehalten sind, zu falten und zu entfalten. Ferner verschiebt ein einfacher mechanischer oder elektronischer, frequenzgesteuerter Antrieb die Schlitten mit einer allgemein konstanten Geschwindigkeit stromab in der Rückstrecke von dem stromabwärtigen Ende des Wegs zu dem stromaufwärtigen Ende des Wegs.

Somit wird das Transportsystem für die Beutelherstell- und Beutelfüllmaschine erheblich vereinfacht. In der kritischen Arbeitsstrecke wird der elektronische Antrieb verwendet, wie er in der vorstehenden US 6,876,107 beschrieben ist. Folglich ist es von einer einfachen Eingangsstation möglich, den Abstand und die Geschwindigkeit der Schlitten zu variieren, während sie durch die Falt-, Füll-, Entfalt- und Versiegelstation fahren. Wenn irgendeine dieser Stationen nicht erforderlich ist, zum Beispiel kann die Faltstation unnötig sein, wenn die Beutel mit einer Flüssigkeit gefüllt werden, kann die Maschine lediglich aus einem Beutelfaltfüllabschnitt bestehen, dem vorgefertigte Beutel zugeführt werden. Wenn in ähnlicher Weise die Beutelgröße verändert wird, ist es leicht, den kritischen Klammerabstand zu variieren. Andererseits kann in der Rückstrecke eine einfache Fördereinrichtung, zum Beispiel ein Zahnriemen, der mit aufrecht stehenden Stiften auf den einzelnen Schlitten in Eingriff steht, oder eine einfache frequenzgesteuerte Fördereinrichtung, die Schlitten zurück zu dem stromaufwärtigen Ende bewegen.

Gemäß einem Merkmal der Erfindung umfasst die Rückstrecke bogenförmige stromaufwärtige und stromabwärtige Umkehrbereiche an den stromaufwärtigen und stromabwärtigen Enden der Arbeitsstrecke und einen geraden Bereich, der sich allgemein parallel zu der Arbeitsstrecke zwischen den Umkehrbereichen erstreckt, Die einfache Rückfördereinrichtung kann jeweilige stromaufwärtige und stromabwärtige Räder an den Umkehrbereichen aufweisen. Alternativ weist jeder der Umkehrbereiche ein jeweiliges bogenförmiges Array von Elektromagneten auf, die einen Teil einer einfachen frequenzgesteuerten Rückfördereinrichtung bilden.

Mit dem System dieser Erfindung verschiebt die einfache Fördereinrichtung die Schlitten entlang der Rückstrecke, mit einer höheren Durchschnittsgeschwindigkeit als eine Durchschnittsgeschwindigkeit, mit der die Schlitten durch die Steuereinrichtung in der Arbeitsstrecke bewegt werden. Der erhebliche Vorteil hiervon ist, dass die einfache Rückfördereinrichtung mit einer sehr hohen Geschwindigkeit betrieben werden kann, wodurch die Rücklaufzeit eines Schlittens auf einen kleinen Bruchteil der Zeit verringert wird, die zum Durchlaufen der Arbeitsstrecke benötigt wird, so dass eine wesentlich kleinere Anzahl an Schlitten benötigt wird.

In Übereinstimmung mit der Erfindung weist die Maschine ferner stromab der Aufnahmestation und stromauf der Füllstation eine Faltstation auf, in der einzelne, aus einer schweißbaren Folle hergestellte Beutel zum Füllen geöffnet werden. Stromab hiervon gibt es eine Entfaltstation, in der die nach oben gerichtete Öffnung des gefalteten Beutels geöffnet wird.

Das obige und andere Ziele, Merkmale und Vorteile werden leichter aus der folgenden Beschreibung ersichtlich werden, wobei Bezug auf die beigefügte Zeichnung genommen wird, in der:
- Fig. 1: eine Ansicht in kleinem Maßstab einer Beutelherstell- und Beutelfüllmaschine gemäß der Erfindung ist;
- Fig. 2: eine teilweise schematische Perspektivansicht der Maschine aus Fig. 1 ist;
- Fig. 3: eine Seitenansicht eines Teils der Schiene des Transportsystems dieser Erfindung ist;
- Fig. 4: ein Schnitt ist, der entlang der Linie IV-IV der Fig. 3 gemacht wurde:
- Fig. 5: eine Perspektivansicht eines Beuteltransfermechanismus gemäß der Erfindung ist;

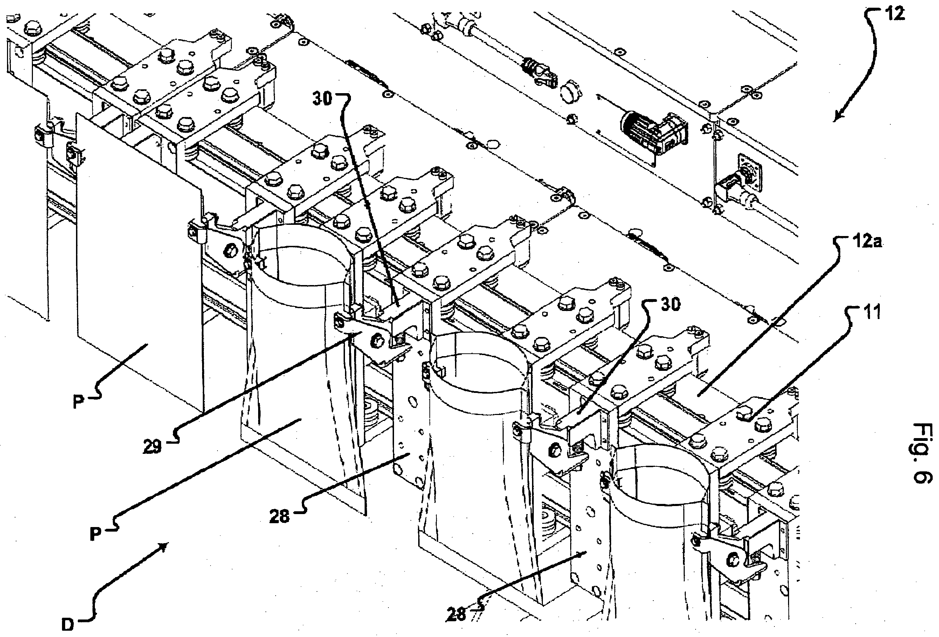

- Fig. 6: eine Perspektivansicht der Faltstation an dem stromaufwärtigen Ende der Arbeitsstrecke ist;
- Fig. 7: eine Perspektivansicht des stromaufwärtigen Endes der stromaufwärtigen Enden der Arbeits- und Rückstrecken gemäß der Erfindung ist;
- Fig. 8: eine Seitenansicht des Transferschlittens ist, der die Beutel an dem stromaufwärtigen Ende der Arbeitsstrecke in die Greifer lädt; und
- Fig. 9: eine weitere Perspektivansicht eines Beutelgreiferpaars ist.

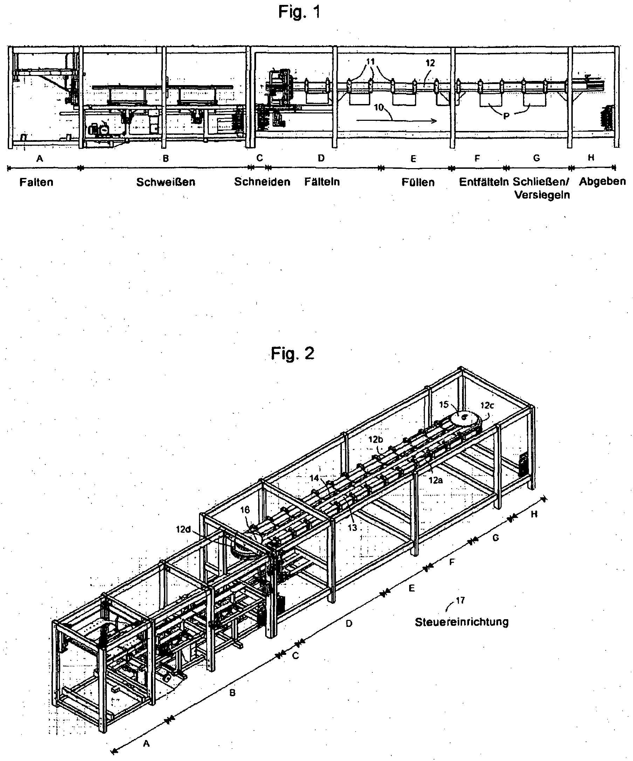

Wie in den Fig. 1 und 2 zu sehen ist, erstreckt sich eine Maschine gemäß der Erfindung in einer längs laufenden Fahrrichtung 10 und weist eine Faltstation A, eine Schweißstation B und eine Schneidstation C auf, wie in US 2010/0255372 beschrieben ist, die zusammen eine Aufnahmestation bilden, in der eine Bahn einer Plastikfolie zur Hälfte gefaltet wird, dann mit einer Reihe von quer laufenden, durchgehenden Schweißnähten versehen wird und dann in einzelne Beutel P zwischen den Schweißnähten geschnitten wird, wie aus dem Stand der Technik wohl bekannt ist. Die einzelnen Beutel werden dann mit ihren Öffnungen nach oben gerichtet ausgerichtet und werden jeweils zwischen zwei in Längsrichtung beabstandeten Schlittenklammern 11 auf der Schiene 12 begriffen, um stromab in die Richtung 10 fortzufahren.

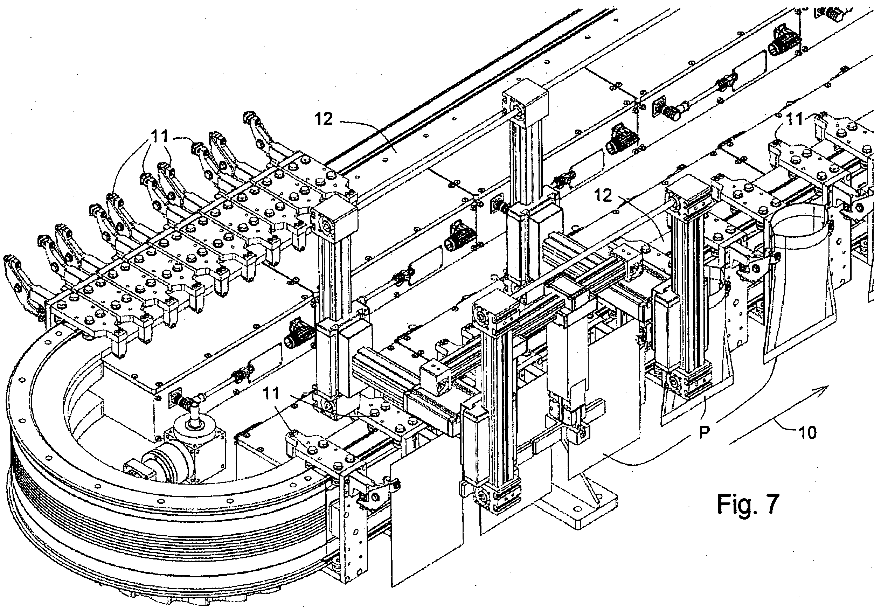

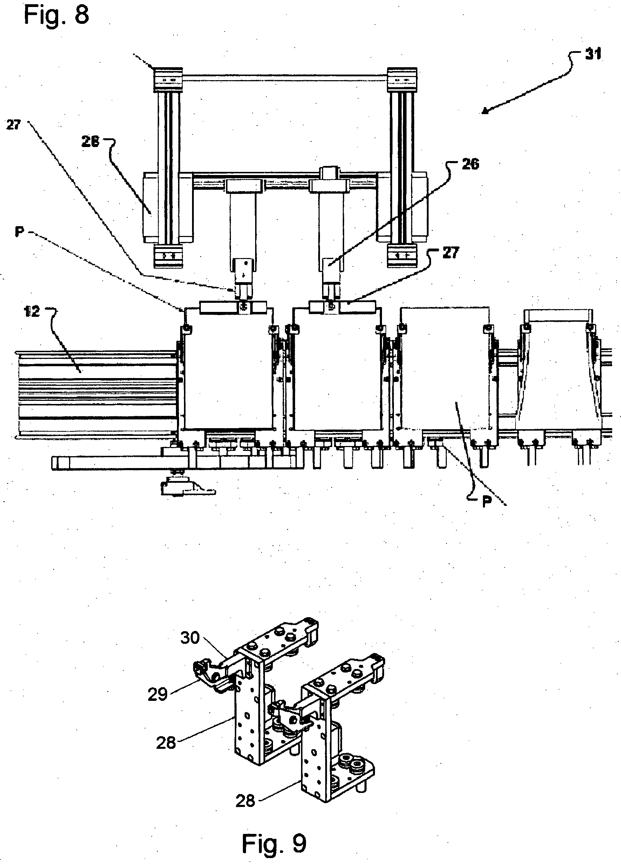

Wie ebenfalls in den Fig. 7 und 8 angegeben ist, wird in der Faltstation D die nachlaufende Klammer 11 jedes Paars der den Beutel haltenden Klammern 11 etwas beschleunigt oder die führende Klammer 11 abgebremst oder beide, so dass die Klammern 11 jedes Paars näher zusammen kommen. Zur selben Zeit werden nicht dargestellte Greifer, zum Beispiel Saugnäpfe, mit gegenüberliegenden Seiten jedes Beutels P in Eingriff gebracht, um sie auseinander zu ziehen, so dass in der Füllstation E eine Vorrichtung, wie zum Beispiel in US 5,70,914 von Shalit dargestellt, die gefalteten Beutel P durch Abgeben einer dosierten Menge eines Füllguts in den Beutel P füllt, obwohl es selbstverständlich innerhalb des Geltungsbereichs der Erfindung liegt, wenn der Inhalt ein einzelnes Objekt ist, der in den Beutel gefüllt wird, oder sogar Flüssigkeiten.

Nachfolgend werden in der Entfaltstation F die Klammern 11 jedes Beutels P in die Richtung 10 auseinander bewegt, um die geöffnete Öffnung der Beutel P zu glätten, die dann in der Schließ-/Versiegelstation G zugeschweißt werden. Schließlich werden die gefüllten, versiegelten Beutel durch die Klammern 11 in der Abgabestation H freigegeben, um verpackt und für den Versand vorbereitet zu werden.

Die Fig. 2, 7 und 8 stellen deutlich dar, wie die Schiene 12 ringförmig ist, das heißt eine endlose Schleife mit einer geraden Arbeitsstrecke 12a, einer geraden Rückstrecke 12b, die sich parallel zu der Strecke 12a erstreckt, und halbkreisförmigen stromaufwärtigen und stromabwärtigen Umkehrbereichen 12a und 12b, die jewells die stromaufwärtigen und stromabwärtigen Enden der Strecken 12a und 12b miteinander verbinden.

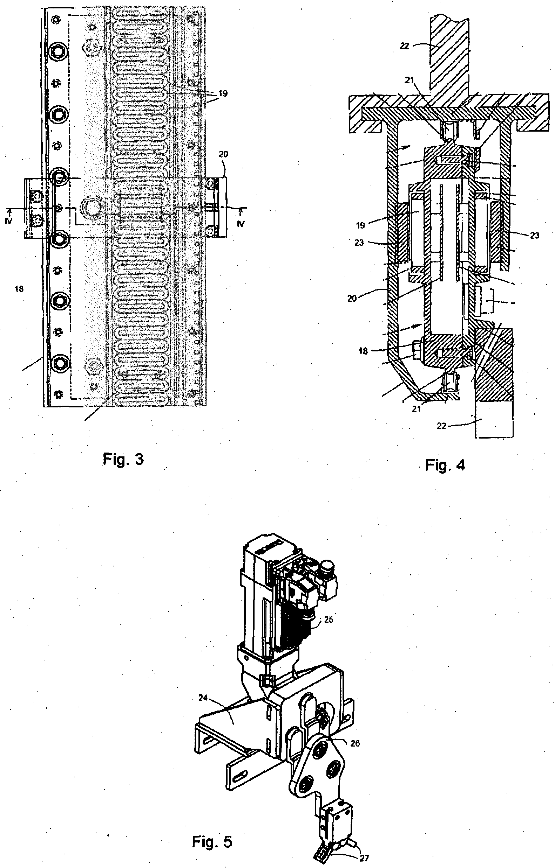

Gemäß der Erfindung werden die Schlitten/Klammern 12 in der Arbeitsstrecke durch eine elektronische Fördereinrichtung eines Typs angetrieben, der in der oben zitierten US 6,876,107 beschrieben ist und eine Reihe von Elektromagneten aufweist, die durch eine programmierbare Steuereinrichtung betrieben werden. Insbesondere, wie eingehender in den Fig. 3 und 4 dargestellt ist, ist die Schiene 12 in der Strecke 12a als eine starre Schiene 18 ausgebildet, die zwei Reihen Elektromagnete oder Spulen 19 trägt, die einzeln oder gruppenweise durch die Steuereinrichtung 17 erregt werden können.

Die Schlittenklammern 11 weisen jeweils einen Körper 20 auf, der das Meiste der Schiene umgibt und der eben zu jeder Reihe der Spulen oder Elektromagnete 19 ein jeweiliges Permanentmagnetpaar trägt. Rollen 21 tragen die Schlittenkörper 20 auf der Schiene 20 und Backen 22 tragen eine Standard-Zwei-Finger-Klammer von der in verschiedenen der vorstehend zitierten Vorveröffentlichungen beschriebenen Art.

Dieser in den Fig. 3 und 4 dargestellte Aufbau ermöglicht, dass die Schlitten 11 entlang der Arbeitsstrecke 12a mit Abständen und Geschwindigkeiten vorangetrieben werden, die leicht auf einem solchen Niveau gesteuert werden können, dass benachbarte Schlitten 11 mit unterschiedlichen Geschwindigkeiten bewegt werden können und die Abstände zwischen den Schlitten beim Bewegen entlang der Strecke 11a geändert werden können, wodurch das Falten und Entfalten und, falls erforderlich, das Anpassen an Beutel P unterschiedlicher Größen möglich wird

In der Rückstrecke werden die Schlitten 11 durch die einfache mechanische Fördereinrichtung 14 vorangetrieben, die kontinuierlich betrieben wird und die ein einfacher Zahnriemen sein kann, der mit den Schlitten in Eingriff steht und sie entgegen der Richtung 10 mit hoher Geschwindigkeit zurück bewegt, wie zum Beispiel in der WO 2009/0152249 beschrieben ist. In der Praxis ist die Geschwindigkeit, mit der die Fördereinrichtung 14 arbeitet, viel größer als die Durchschnittsgeschwindigkeit, mit der die Fördereinrichtung 13 die Schlitten 11 in der Arbeitsstrecke 12a bewegt. Dies ermöglicht es, lediglich mit ein paar mehr Klammerschlitten 11 zu arbeiten als aktuell in der Arbeitsstrecke 11 a verwendet werden, da die Rückkehrzeit so schnell ist. Alternativ kann eine einfache, frequenzgesteuerte, elektromagnetische Fördereinrichtung dazu dienen, die Schlitten 11 schnell zurück zu dem stromaufwärtigen Ende der Rückstrecke 12b zu fahren.

An den zwei Umkehrbereichen 12c und 12d ist es möglich, bogenförmige elektronische Antriebe vorzusehen, wie sie zum Beispiel in der Strecke 12a verwendet werden. Es ist jedoch vorteilhafter, die Schlitten 11 durch einfache Zahnräder oder Stachelräder 15 und 16 voranzutreiben, die mit den Stiften auf den Schlitten 11 In Eingriff stehen. Das stromabwärtige Stachelrad 15 dreht sich kontinuierlich mit einer Umfangsgeschwindigkeit gleich jener der Rückfördereinrichtung 14, so dass die Schlitten 11 durch das Stachelrad 15 bis zu der Rückkehrgeschwindigkeit beschleunigt werden. Das stromaufwärtige Stachelrad 16 kann ebenfalls mit dieser hohen Geschwindigkeit betrieben werden oder mit einer niedrigeren Geschwindigkeit, um die Schlitten auf die Geschwindigkeit abzubremsen, mit der sie in die Arbeitsstrecke 12a eintreten müssen.

Fig. 5 stellt ein Beispiel eines Beutelgreifers gemäß der Erfindung dar, der an dem Maschinenrahmen angebracht ist. Er weist einen Körper 24 auf, der an dem Rahmen der Maschine befestigt Ist. Er weist ebenfalls einen Aktuator auf, der über eine Verbindung 26 mit einem Paar Greiferarme 27 verbunden ist.

Ein weiteres System ist in Fig. 9 dargestellt, bei dem ein Greifer, der ausgelegt ist, um die Schiene 12 zu passen und an einem entsprechenden Schlitten 11 befestigt zu werden, einen Körper 28 aufweist, der einen drehbaren Greiferarm 29 trägt, der auf einer Backe 29 getragen wird, so dass eine Kante eines Beutels P gegen den Körper 28 gedrückt und an einer Stelle gehalten werden kann. Die Greifer sind paarweise und einer der Arme 29 erstreckt sich von links und der andere von rechts, so dass sie aus dem Weg sind, wenn sie einen Beutel halten.

## Patentansprüche

1. Transportsystem für eine Maschine mit einem Produktionsweg, der mit einer stromaufwärtigen Aufnahme (A, B, C) versehen ist, in der einzelne Beutel (P) aus einer schweißbaren Folie hergestellt oder einzelne vorgefertigte Beutel (P) zugeführt und mit Öffnungen der Beutel nach oben gerichtet ausgerichtet werden, einer Füllstation (E) stromab hiervon, in der Inhalte in die offenen Beutel (P) durch die nach oben offenen Öffnungen der Beutel (P) eingefüllt werden und einer Versiegelstation (G) stromab hiervon, in der die offenen Öffnungen der Beutel (P) geschlossen werden, aufweisend:
eine Endlosschiene (12) mit einer Arbeitsstrecke (12a), die sich entlang des Wegs erstreckt, und einer Rückstrecke (12b), die sich von einem stromabwärtigen Ende der Arbeitsstrecke (12a) zu einem stromaufwärtigen Ende der Arbeitstrecke (12a) erstreckt;
mehrere Schlitten (11), die jeweils wenigstens einen Permanentmagneten und eine Klammer (27, 29) tragen, wobei die Schlitten (11) auf der Schiene (12) zur Bewegung durch die Stationen auf der Arbeitsstrecke (12a) und zur Bewegung von dem stromabwärtigen Ende der Arbeitsstrecke (12a) entlang der Rückstrecke (12b) zurück zu dem stromaufwärtigen Ende der Arbeitsstrecke (12a) fahren;
ein Elektromagnetenarray (19) auf der Schiene (12); und
eine elektronische Steuereinrichtung (17), die mit den Elektromagneten (19) verbunden ist, um die Schlitten (11) stromab durch die Arbeitsstrecke (12a) voranzutreiben, während die Fahrgeschwindigkeiten wenigstens der Hälfte der Schlitten (11) in der Arbeitsstrecke (12a) variiert werden, um so Beutel (P), die in den Klammern (27, 29) der Schlitten (11) gehalten sind, zu falten und zu entfalten,
wobei das Elektromagnetenarray (19) lediglich entlang der Arbeitsstrecke (12a) angeordnet ist,
wobei eine mechanische oder frequenzgesteuerte Fördereinrichtung (14) zum Verschieben der Schlitten (11) entlang der Rückstrecke (12b) von dem stromabwärtigen Ende des Wegs zu dem stromaufwärtigen Ende des Wegs mit einer allgemein konstanten Geschwindigkeit vorgesehen ist,
und wobei die einfache Fördereinrichtung (14) die Schlitten (11) entlang der Rückstrecke (12b) mit einer höheren Durchschnittsgeschwindigkeit verschiebt als eine Durchschnittsgeschwindigkeit, mit der die Schlitten (11) durch die Steuereinrichtung (17) in der Arbeitsstrecke (12a) bewegt werden

2. Transportsystem nach Anspruch 1, **dadurch gekennzeichnet, dass** die Rückstrecke (12b) bogenförmige stromaufwärtige und stromabwärtige Umkehrbereiche (12c, 12d) an den stromaufwärtigen und stromabwärtigen Enden der Arbeitsstrecke (12a) und einen geraden Bereich umfasst, der sich allgemein parallel zu der Arbeitsstrecke (12a) zwischen den Umkehrbereichen (12c, 12d) erstreckt.

3. Transportsystem nach Anspruch 1 oder 2, **dadurch gekennzeichnet, dass** die einfache Fördereinrichtung (14) jeweilige stromaufwärtige und stromabwärtige Räder (15, 16) an Umkehrbereichen umfasst.

4. Transportsystem nach Anspruch 2 oder 3, **dadurch gekennzeichnet, dass** jeder der Umkehrbereiche (12c, 12d) ein jeweiliges bogenförmiges Array von Elektromagneten (19) aufweist, die mit der Steuereinrichtung (17) verbunden sind, wobei sich die mechanische Fördereinrichtung (14) lediglich entlang der geraden Strecke erstreckt.

5. Transportsystem nach einem der vorhergehenden Ansprüche **dadurch gekennzeichnet, dass** die Maschine ferner stromab der Aufnahmestation (A, B, C) und stromauf der Füllstation (E) aufweist:
- eine Faltstation (D), in der einzelne, aus einer schweißbaren Folie hergestellte Beutel (P) zum Füllen geöffnet werden und stromab hiervon
- eine Entfaltstation (F) stromab, in der die nach oben gerichtete Öffnung des gefalteten Beutels (P) geöffnet wird.

## Claims

1. Conveying system for a machine with a production path, which is provided with an upstream take-up station (A, B, C) in which individual bags (P) are produced from a weldable film or to which individual ready-prepared bags (P) are conveyed, and with openings of the bags aligned directed upwards, a filling station (E) downstream of this in which contents are filled into the open bags (P) through the openings of the bags (P) which are open upwards, and a sealing station (G) downstream of this, in which the open openings of the bags (P) are sealed, comprising:
an endless rail (12) with a working section (12a) which extends along the path, and a return section (12b) which extends from a downstream end of the working section (12a) to an upstream end of the working section (12a);
a plurality of carriages (11), each of which carries at least one permanent magnet and a clamp (27, 29), wherein the carriages (11) travel on the rail (12) for movement through the stations on the working section (12a) and for movement from the downstream end of the working section (12a) along the return section (12b) back to the upstream end of the working section (12a);
an electromagnet array (19) on the rail (12); and
an electronic control device (17) which is connected to the electromagnets (19) in order to propel the carriages (11) downstream through the working section (12a), while the travel speeds of at least half of the carriages (11) are varied in the working section (12a), in order in this way to fold and unfold bags (P) which are held in the clamps (27, 29) of the carriages,
wherein the electromagnet array (19) is arranged only along the working section (12a),
wherein a mechanical or frequency-controlled conveying device (14) is provided for propelling the carriages (11) along the return section (12b) from the downstream end of the path to the upstream end of the path at a generally constant speed,
and wherein the simple conveying device (14) propels the carriages (11) along the return section (12b) at a higher average speed than the average speed with which the carriages are moved by the control device (17) on the working section (12a).

2. Conveying system according to claim 1, **characterised in that** the return section (12b) comprises arc-shaped upstream and downstream reversing areas (12c, 12d) at the upstream and downstream ends of the working section (12a) and a straight section, which extends generally parallel to the working section (12a) between the reversing areas (12c, 12d).

3. Conveying system according to claim 1 or 2, **characterised in that** the simple conveying device (14) comprises respective upstream and downstream wheels (15, 16) at the reversing areas.

4. Conveying system according to claim 2 or 3, **characterised in that** each of the reversing areas (12c, 12d) comprises a respective arc-shaped array of electromagnets (19), which are connected to the control device (17), wherein the mechanical conveying device (14) extends only along the straight section.

5. Conveying system according to any one of the preceding claims, **characterised in that** the machine also comprises, downstream of the take-up station (A, B. C) and upstream of the filling station (E):
- a folding station (D), in which individual bags (P), made of a weldable film, are opened for filling, and downstream of this
- an unfolding station (F) downstream, in which the opening, directed upwards, of the folded bag (P) is opened.

## Revendications

1. Système de transport pour une machine avec une voie de production qui est pourvue d'un logement en amont (A, B, C), dans lequel des sachets (P) individuels sont fabriqués à partir d'une feuille soudable ou des sachets (P) préfabriqués individuels sont amenés et sont orientés avec des ouvertures des sachets dirigées vers le haut, un poste de remplissage (E) en aval de ceux-ci, dans lequel des contenus sont remplis dans les sachets ouverts (P) par les ouvertures ouvertes vers le haut des sachets (P), et un poste de scellage (G) en aval de ceux-ci, dans lequel les ouvertures ouvertes des sachets (P) sont fermées, présentant :
un rail sans fin (12) avec un chemin de travail (12a) qui s'étend le long de la voie, et un chemin de retour (12b) qui s'étend d'une extrémité en aval du chemin de travail (12a) à une extrémité en amont du chemin de travail (12a) ;
plusieurs chariots (11) qui portent respectivement au moins un aimant permanent et une pince (27, 29), les chariots (11) se déplaçant sur le rail (12) pour le déplacement par les postes sur le chemin de travail (12a) et pour le déplacement de l'extrémité en aval du chemin de travail (12a) le long de la voie arrière (12b) pour retourner à l'extrémité en amont du chemin de travail (12a) ;
un ensemble d'électroaimants (19) sur le rail (12) ; et
un dispositif de commande électronique (17) qui est relié aux électroaimants (19) afin de pousser les chariots (11) en aval par le chemin de travail (12a), alors que les vitesses de roulement au moins de la moitié des chariots (11) dans le chemin de travail (12a) sont variées afin de plier et déplier ainsi des sachets (P) qui sont maintenus dans les pinces (27, 29) des chariots (11),
l'ensemble d'électroaimant (19) étant agencé juste le long du chemin de travail (12a),
un dispositif de transport (14) mécanique ou commandé par fréquence étant prévu pour le déplacement des chariots (11) le long du chemin de retour (12b) de l'extrémité en aval de la voie à l'extrémité en amont de la voie à une vitesse généralement constante,
et le dispositif de transport simple (14) déplaçant les chariots (11) le long du chemin de retour (12b) avec une vitesse moyenne plus grande qu'une vitesse moyenne, à laquelle les chariots (11) sont déplacés par le dispositif de commande (17) dans le chemin de travail (12a).

2. Système de transport selon la revendication 1, **caractérisé en ce que** le chemin de retour (12b) comporte des zones de retournement (12c, 12d) en aval et en amont arquées sur les extrémités en amont et en aval du chemin de travail (12a) et une zone droite qui s'étend généralement parallèlement au chemin de travail (12a) entre les zones de retournement (12c, 12d).

3. Système de transport selon la revendication 1 ou 2, **caractérisé en ce que** le dispositif de transport (14) simple comporte des roues (15, 16) en amont et en aval respectives sur des zones de retournement.

4. Système de transport selon la revendication 2 ou 3, **caractérisé en ce que** chacune des zones de retournement (12c, 12d) présente un ensemble arqué respectif d'électroaimants (19) qui sont reliés au dispositif de commande (17), le dispositif de transport mécanique (14) s'étendant juste le long du chemin droit.

5. Système de transport selon l'une quelconque des revendications précédentes, **caractérisé en ce que** la machine présente de plus en aval du poste de réception (A, B, C) et en amont du poste de remplissage (E) :
- un poste de pliage (D), dans lequel des sachets (P) individuels fabriqués à partir d'un film soudable sont ouverts pour le remplissage et en aval de celui-ci
- un poste de dépliage (F) en aval, dans lequel l'ouverture dirigée vers le haut du sachet (P) plié est ouverte.
